# EUROPEAN PATENT SPECIFICATION

(11) **EP 1 350 172 B1**
(45) Date of publication and mention of the grant of the patent: **07.12.2005**
(21) Application number: 01944326.6
(22) Date of filing: 07.06.2001
(51) Int. Cl.: G06F 15/76

(54) **METHOD AND APPARATUS FOR PROVIDING REAL-TIME OPERATION IN A PERSONAL COMPUTER SYSTEM**
VERFAHREN UND VORRICHTUNG ZUR ECHTZEIT-AUSFÜHRUNG IN EINEM PERSONALCOMPUTERSYSTEM
PROCEDE ET APPAREIL D'EXPLOITATION EN TEMPS REEL D'UN SYSTEME D'ORDINATEUR PERSONNEL

(30) Priority: 28.06.2000 US 606652
(43) Date of publication of application: 08.10.2003
(73) Proprietor: INTEL CORPORATION, Santa Clara, CA 95052 (US)
(72) Inventor: KARDACH, James, Saratoga, CA 95070 (US)
(74) Representative: Molyneaux, Martyn William
(86) International application number: PCT/US2001/018384
(87) International publication number: WO 2002/001382

(56) References cited:
- EP-A- 0 545 581
- "L7200 Internet System Processor - DSP Enhanced" LINK.UP, April 1999 (1999-04), pages 1-14, XP002226784
- P. CLARKE: "Two players offer Bluetooth silicon" EETIMES, [Online] 7 December 1999 (1999-12-07), pages 1-2, XP002226785 Retrieved from the Internet: <URL:http://www.eetimes.com/story/OEG19991 207S0087> [retrieved on 2003-01-08]
- BAUM A J ET AL: "A MULTIMEDIA CHIPSET FOR CONSUMER AUDIO-VISUAL APPLICATIONS" IEEE TRANSACTIONS ON CONSUMER ELECTRONICS, IEEE INC. NEW YORK, US, vol. 43, no. 3, 1 August 1997 (1997-08-01), pages 646-648, XP000742544 ISSN: 0098-3063
- PETERS K H: "Migrating to single chip systems" EMBEDDED SYSTEMS PROGRAMMING, APRIL 1999, MILLER FREEMAN, USA, vol. 12, no. 4, pages 30-31, 34, 36, 38, 40, 42, 44 - 45, XP002226786 ISSN: 1040-3272
- BURSKY D: "Tool suite enables designers to craft customized embedded processors" ELECTRONIC DESIGN, 8 February 1999 (1999-02-08), XP002192659
- D. LAMMERS: "Tensilica architecture adds DSP coprocessor" EETIMES, [Online] 12 June 2000 (2000-06-12), pages 1-3, XP002226787 Retrieved from the Internet: <URL:http://www.eetimes.com/story/OEG20000 612S0037> [retrieved on 2003-01-08]

## Description

### FIELD OF THE INVENTION

The present invention relates to computer systems; more particularly, the present invention relates to executing real-time applications at a computer system.

### BACKGROUND

Currently, personal computers are used for various applications in order to simplify tasks to be performed by a user. Nevertheless, conventional personal computers are enable to perform real-time applications. A real-time applications is one in which the correctness of computations performed by a computer not only depends upon logical correctness of the computation, but also upon the time at which the result is produced. If the timing constraints are not met the system fails. For example, in a patriot missile application, a patriot must locate an incoming missile on a radar detection system and fire a defense missile before the incoming missile can destroy its target.

It is difficult to execute real-time operations on conventional computer systems operating with general-purpose operating systems such as Windows 98® or Windows NT® because general-purpose operating system kernels do not have the capability to respond to events within a given time restriction. In addition, the hardware platforms of typical computer systems do not generate events within the resolution of time required for execution.

"L7200 Internet System Processor - DSP Enhanced" LINK.UP, April 1999 (1999-04), pages 1-14, XP002226784 discloses an internet system processor that includes a DSP and a CPU. The processor supports a Windows (RTM) operating system as well as real-time operating systems.

PETERS K H: "Migrating to single chip systems" EMBEDDED SYSTEMS PROGRAMMING, APRIL 1999, MILLER FREEMAN, USA, vol. 12, no. 4, pages 30-31, 34, 36, 38, 40, 42, 44-45, XP002226786 ISSN: 1040-3272 discloses that chip manufacturers are able to improve chip density in transistors and gates by decreasing the feature sizes on silicon. This improvement enables designers to place more functionality on a single die. Developers are able to integrate DSP cores into a single chip.

D.LAMMERS: "Tensilica architecture adds DSP coprocessor" EETIMES, [Online] 12 June 2000 (2000-06-12), pages 1-3, XP002226787 Retrieved from the Internet: URL:http://www.eetimes.com/story/OEG200006 12S0037> [retrieved on 2003-01-08] discloses that CPU vendors are moving to 0.18 micron technology with difficulty being to complement the increasingly tiny processor cores with flash and embedded DRAM, programmable logic, DSP and other coprocessor functions that bring added value..

P.CLARKE: "Two players offer Bluetooth silicon" EETIMES, [Online] 7 December 1999 (1999-12-07), pages 1-2, XP002226785 Retrieved from the Internet: URL:http//www.eetimes.com/story/OEG199912 07S0087> [retrieved on 2003-01-08] discloses the use of Bluetooth (RTM) technology.

In an operating system like Windows 98® there are no rules as to how application drivers are to treat events. For example, in some instances drivers may shut off a received event for up to five seconds before the event is processed. It is apparent that such a delay would be unacceptable for a real-time operation.

Therefore, it would be desirable to provide real-time function to a personal Computer system.

### SUMMARY OF THE INVENTION

According to a first aspect of this invention as provided a computer system as claimed in claim 1 herein.

According to a second aspect of this invention as provided a non-symmetric processor as claimed in claim 9 herein.

The referred features of the invention are defined by the dependent claims.

### BRIEF DESCRIPTION OF THE DRAWINGS

The present invention will be understood more fully from the detailed description given below and from the accompanying drawings of various embodiments of the invention. The drawings, however, should not be taken to limit the invention to the specific embodiments, but are for explanation and understanding only.
Figure 1 is a block diagram of one embodiment of a computer system; and
Figure 2 is a block diagram of one embodiment of a non-symmetric processor.

### DETAILED DESCRIPTION

A method and apparatus for providing real-time operation in a personal computer system is described. In the following detailed description of the present invention numerous specific details are set forth in order to provide a thorough understanding of the present invention. However, it will be apparent to one skilled in the art that the present invention may be practiced without these specific details. In other instances, well-known structures and devices are shown in block diagram form, rather than in detail, in order to avoid obscuring the present invention.

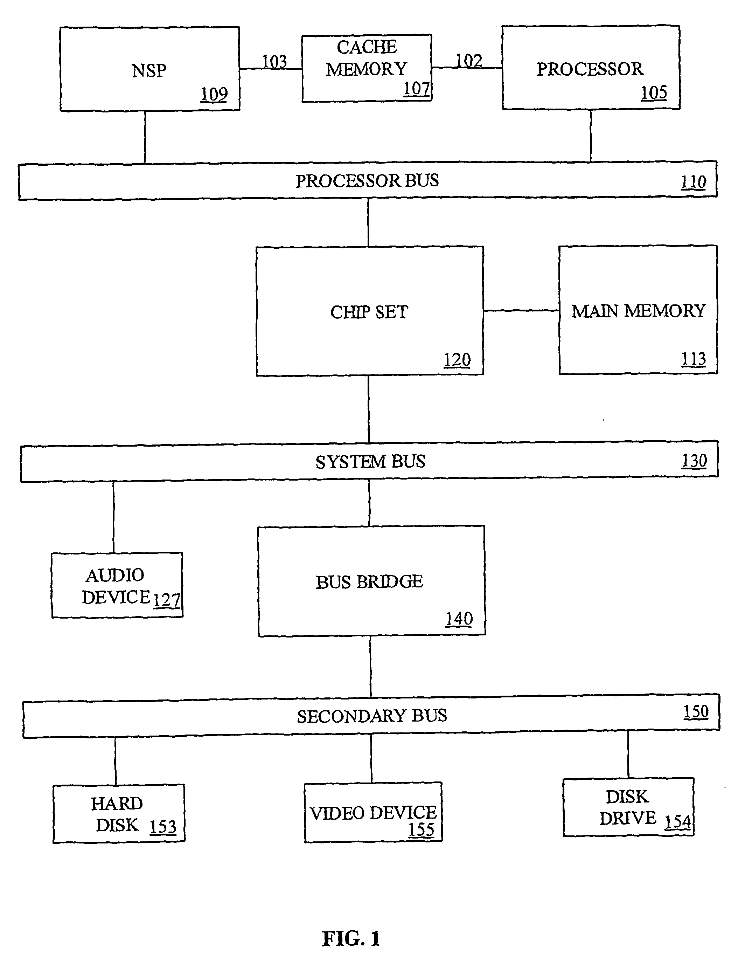

Figure 1 is a block diagram of one embodiment of a computer system 100. Computer system 100 includes a central processing unit (processor) 105 coupled to processor bus 110. In one embodiment processor 105 is an Intel architecture processor in the Pentium® family of processors including the Pentium® II family and mobile Pentium® and Pentium® II processors available from Intel Corporation of Santa Clara, California. Alternatively, other processors may be used. Processor 105 may include a first level (L1) cache memory (not shown in Figure 1).

In one embodiment, processor 105 is also coupled to cache memory 107, which is a second level (L2) cache memory, via dedicated cache bus 102. The L1 and L2 cache memories can also be integrated into a single device. Cache memory 107 is optional and is not required for computer system 100. In addition, computer system 100 includes a non-symmetric processor (NSP) 109 coupled to cache memory 107 and processor bus 110. According to one embodiment, NSP is integrated with processor 105 and is implemented to execute real-time protocols at computer system 100.

Chip set 120 is also coupled to processor bus 110. In one embodiment, chip set 120 is the 440BX chip set available from Intel Corporation; however, other chip sets can also be used. Chip set 120 may include a memory controller for controlling a main memory 113. Further, chipset 220 may also include an Accelerated Graphics Port (AGP) Specification Revision 2.0 interface 320 developed by Intel Corporation of Santa Clara, California. AGP interface 320 is coupled to a video device 125 and handles video data requests to access main memory 113.

Main memory 113 is coupled to processor bus 110 through chip set 120. Main memory 113 and cache memory 107 store sequences of instructions that are executed by processor 105 and NSP109. The sequences of instructions executed by processor 105 and NSP109 may be retrieved from main memory 113, cache memory 107, or any other storage device. Additional devices may also be coupled to processor bus 110, such as multiple main memory devices. Video device 125 is also coupled to chip set 120. In one embodiment, video device includes a video monitor such as a cathode ray tube (CRT) or liquid crystal display (LCD) and necessary support circuitry.

Processor bus 110 is coupled to system bus 130 by chip set 120. In one embodiment, system bus 130 is a Peripheral Component Interconnect (PCI) bus adhering to a Specification Revision 2.1 bus developed by the PCI Special Interest Group of Portland, Oregon; however, other bus standards may also be used. Multiple devices, such as audio device 127, may be coupled to system bus 130. According to one embodiment, a radio transceiver 129 is coupled to system bus 130. Radio transceiver 129 may be used to implement a communication interface between computer system 100 and a remote device (not shown).

Bus bridge 140 couples system bus 130 to secondary bus 150. In one embodiment, secondary bus 150 is an Industry Standard Architecture (ISA) Specification Revision 1.0a bus developed by International Business Machines of Armonk, New York. However, other bus standards may also be used, for example Extended Industry Standard Architecture (EISA) Specification Revision 3.12 developed by Compaq Computer, et al. Multiple devices, such as hard disk 153 and disk drive 154 may be coupled to secondary bus 150. Other devices, such as cursor control devices (not shown in Figure 1), may be coupled to secondary bus 150.

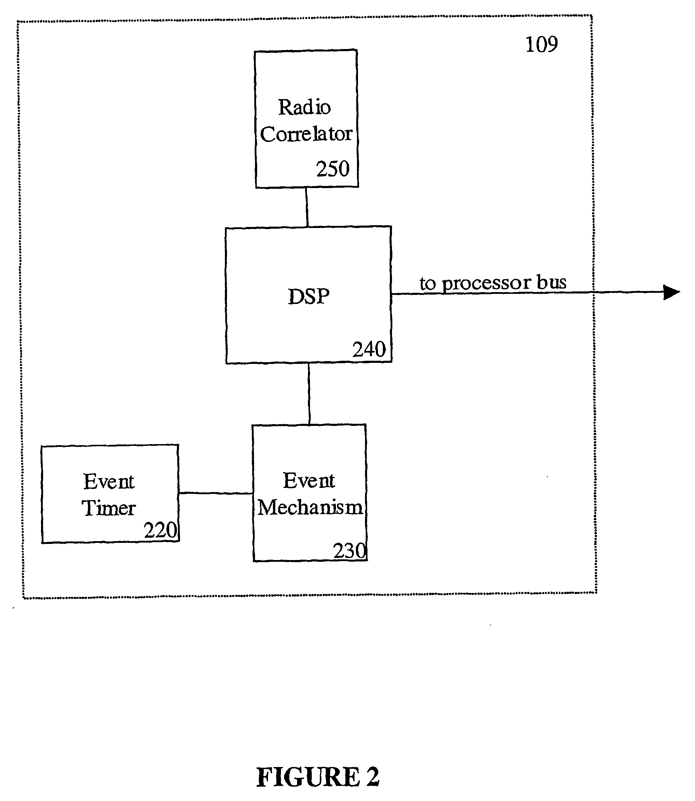

Figure 2 is a block diagram of one embodiment of NSP 109. NSP 109 includes an event timer 220, an event mechanism 230, a digital signal processor 240 and a radio correlator 250. Event timer 220 is used as a mechanism to generate timer interrupts at event mechanism 240. According to one embodiment, timer 220 transmits a signal to event mechanism 230 at predetermined intervals. The signal indicates that event mechanism 230 is to generate a timer interrupt. According to one embodiment, timer interrupts are generated every 5 milliseconds. However, one of ordinary skill in the art will appreciate that other time intervals may be used to generate interrupts.

DSP 240 is coupled to event mechanism 230. According to one embodiment, NSP 109 implements a real-time operating system that executes real-time applications. Real-time applications are applications that have time constraints on aspects of their behavior. If the constraints are not met, the application either fails or needs to adapt gracefully to the operating conditions.

DSP 240 is integrated on the same semiconductor die as processor 105 and shares the memory resources of processor 105. Processor 105 operates with a general purpose operating system that executes non-real time application. According to one embodiment, processor 105 operates using the Windows 98® operating system developed by Microsoft Corporation of Redmond, Washington. However, one of ordinary skill in the art will appreciate that computer system 100 may be implemented using other general-purpose operating systems.

According to a further embodiment, the general-purpose operating system regards DSP 240 as an input/ output (I/O) subsystem. For example, the general-purpose operating system of processor 105 communicates with the real-time operating system as if the real-time operating system were a driver interface attempting to access the resources of processor 105. As a result, the general purpose operating system provides non-pageable memory for execution of the real-time operating system by NSP 109.

Further, the general-purpose operating system is implemented such that no application driver operated by computer system 100 may disable interrupts longer than the predetermined time interval calculates at timer 220. Consequently, the interrupt latency of computer system 100 is guaranteed, allowing computer system 100 to consistently respond to events and information in real-time.

Radio correlator 250 receives real-time data from a source external to computer system 100. Radio correlator 250 converts the received data from a serial format to a parallel format. According to one embodiment, radio correlator is a wireless Bluetooth radio that may communicate with external devices via a Bluetooth interface developed by the Bluetooth Special Interest Group. However, in other embodiments, radio correlator 250 may be used to implement other communication devices (e.g., a baseband processor).

Whereas many alterations and modifications of the present invention will no doubt become apparent to a person of ordinary skill in the art after having read the foregoing description, it is to be understood that any particular embodiment shown and described by way of illustration is in no way intended to be considered limiting. Therefore, references to details of various embodiments are not intended to limit the scope of the claims which in themselves recite only those features regarded as the invention.

## Claims

1. A computer system (100) comprising:
a central processing unit (CPU) (105) to operate according to a general-purpose operating system; and
a non-symmetric processor (NSP) (109), coupled to the CPU, to operate according to a real-time operating system, wherein the NSP and the CPU are integrated on the same integrated circuit die, **characterised in that** the general-purpose operating system communicates with the real-time operating system as if the real-time operating system is a driver interface requesting to access CPU resources.

2. The computer system of claim 1 further comprising a cache memory (107) coupled to the CPU and the NSP, wherein both the CPU and the NSP share the cache memory.

3. The computer system of claim 1 further comprising:
a processor bus (110) coupled to the NSP and the CPU;
a chipset (120) coupled to the processor bus; and
a main memory (113) coupled to the chipset, wherein both the CPU and the NSP share the main memory.

4. The computer system of claim 1 wherein the CPU provides access to non-pageable memory to the NSP for the execution of the real-time operating system.

5. The computer system of claim 4 wherein the general purpose operating system communicates with the real-time operating system as an input/output subsystem.

6. The computer system of claim 1 wherein the NSP comprises:
a digital signal processor (DSP) (240);
an event mechanism (230) coupled to the DSP; and
an event timer (220) coupled to the event mechanism.

7. The computer system of claim 6 wherein the NSP further comprises a radio correlator (250) coupled to the DSP.

8. The computer system of claim 7 wherein the radio correlator is a wireless Bluetooth (RTM) radio.

9. A non-symmetric processor (NSP) comprising:
a digital signal processor (DSP) (240) implementing a real-time operating system to execute real-time applications; **characterised by**
an event mechanism (230), coupled to the DSP, to generate real-time events based upon real-time data received at the NSP; and
an event timer (220), coupled to the event mechanism, to trigger real-time events;
wherein the NSP is integrated on the same integrated circuit as a central processing unit (CPU) (105) that operates according to a general-purpose operating system that communicates with the real-time operating system as if the real-time operating system is a driver interface requesting to access CPU resources.

10. The processor of claim 9 further comprising a radio correlator (250) coupled to the DSP.

11. The processor of claim 10 wherein the radio correlator is a wireless Bluetooth (RTM) radio.

## Patentansprüche

1. Computersystem (100), das folgendes umfasst:
eine Zentraleinheit (CPU) (105) für einen Betrieb gemäß einem allgemeinen Betriebssystem; und
einen nicht-symmetrischen Prozessor (NSP) (109), der mit der CPU gekoppelt ist, so dass er gemäß einem Echtzeit-Betriebssystem arbeitet, wobei der NSP und die CPU auf der gleichen integrierten Halbleiterscheibe integriert sind, **dadurch gekennzeichnet, dass** das allgemeine Betriebssystem so mit dem Echtzeit-Betriebssystem kommuniziert, als wäre das Echtzeit-Betriebssystem eine Treiberschnittstelle, die den Zugriff auf CPU-Ressourcen anfordert.

2. Computersystem nach Anspruch 1, wobei dieses ferner einen Cache-Speicher (107) umfasst, der mit der CPU und dem NSP gekoppelt ist, wobei die CPU und der NSP den Cache-Speicher gemeinsam nutzen.

3. Computersystem nach Anspruch 1, wobei dieses ferner folgendes umfasst:
einen Prozessorbus (110), der mit dem NSP und der CPU gekoppelt ist;
einen Chipsatz (120), der mit dem Prozessorbus gekoppelt ist; und
einen Hauptspeicher (113), der mit dem Chipsatz gekoppelt ist, wobei die CPU und der NSP den Hauptspeicher gemeinsam nutzen.

4. Computersystem nach Anspruch 1, wobei die CPU dem NSP Zugriff auf einen residenten Speicher zur Ausführung des Echtzeit-Betriebssystems bereitstellt.

5. Computersystem nach Anspruch 4, wobei das allgemeine Betriebssystem mit dem Echtzeit-Betriebssystem als ein Ein-Ausgabe-Teilsystem kommuniziert.

6. Computersystem nach Anspruch 1, wobei der NSP folgendes umfasst:
einen digitalen Signalprozessor (DSP) (240);
einen Ereignismechanismus (230), der mit dem DSP gekoppelt ist; und
einen Ereignis-Timer (220), der mit dem Ereignismechanismus gekoppelt ist.

7. Computersystem nach Anspruch 6, wobei der NSP ferner einen Funkkorrelator (250) umfasst, der mit dem NSP gekoppelt ist.

8. Computersystem nach Anspruch 7, wobei es sich bei dem Funkkorrelator um einen kabellosen Bluetooth® Funk handelt.

9. Nicht-symmetrischer Prozessor (NSP), wobei dieser folgendes umfasst:
einen digitalen Signalprozessor (DSP) (240), der ein Echtzeit-Betriebssystem implementiert, um Echtzeitanwendungen auszuführen; **gekennzeichnet durch**
einen Ereignismechanismus (230), der mit dem DSP gekoppelt ist, um auf der Basis von an dem NSP empfangenen Echtzeitdaten Echtzeitereignisse zu erzeugen; und
einen Ereignis-Timer (220), der mit dem Ereignismechanismus gekoppelt ist, um Echtzeitereignisse auszulösen;
wobei der NSP auf der gleichen integrierten Schaltung wie eine Zentraleinheit (CPU) (105) integriert ist, die gemäß einem allgemeinen Betriebssystem arbeitet, das mit dem Echtzeit-Betriebssystem so kommuniziert als wäre das Echtzeit-Betriebssystem eine Treiberschnittstelle, welche den Zugriff auf CPU-Ressourcen anfordert.

10. Prozessor nach Anspruch 9, wobei dieser ferner einen mit dem DSP gekoppelten Funkkorrelator (250) umfasst.

11. Prozessor nach Anspruch 10, wobei es sich bei dem Funkkorrelator um einen kabellosen Bluetooth® Funk handelt.

## Revendications

1. Système informatique (100) comprenant :
une unité centrale (en anglais « Central Processing Unit » - CPU) (105) pour fonctionner selon un système d'exploitation universel ; et
un processeur non symétrique (en anglais « Non-Symmetric Processor - NSP), couplé à la CPU, pour fonctionner selon un système d'exploitation en temps réel, dans lequel le NSP et la CPU sont intégrés sur la même puce de circuit intégré, **caractérisé en ce que** le système d'exploitation universel communique avec le système d'exploitation en temps réel comme si le système d'exploitation en temps réel était une interface de pilote demandant à accéder aux ressources de la CPU.

2. Système informatique selon la revendication 1, comprenant en outre une mémoire cache (107) couplée à la CPU et au NSP, dans lequel la CPU et le NSP partagent la mémoire cache.

3. Système informatique selon la revendication 1, comprenant en outre :
un bus processeur (110) couplé au NSP et à la CPU ;
un ensemble de puces (120) couplé au bus processeur ; et
une mémoire principale (113) couplée à l'ensemble de puces, dans lequel la CPU et le NSP partagent la mémoire cache.

4. Système informatique selon la revendication 1, dans lequel la CPU fournit l'accès à une mémoire non paginable au NSP pour l'exécution du système d'exploitation en temps réel.

5. Système informatique selon la revendication 4, dans lequel le système d'exploitation universel communique avec le système d'exploitation en temps réel comme un sous-système d'entrée/de sortie.

6. Système informatique selon la revendication 1, dans lequel le NSP comprend :
un processeur de signal numérique (en anglais « Digital Signal Processor » - DSP) (240) ;
un mécanisme d'événements (230) couplé au DSP ; et
un temporiseur d'événements (220) couplé au mécanisme d'événements.

7. Système informatique selon la revendication 6, dans lequel le NSP comprend en outre un corrélateur radio (250) couplé au DSP.

8. Système informatique selon la revendication 7, dans lequel le corrélateur radio est une radio sans fil Bluetooth (RTM).

9. Processeur non symétrique (en anglais « Non-Symmetric Processor - NSP) comprenant :
un processeur de signal numérique (en anglais « Digital Signal Processor » - DSP) (240) mettant en oeuvre un système d'exploitation en temps réel pour exécuter des applications en temps réel ; **caractérisé par**
un mécanisme d'événements (230), couplé au DSP, pour générer des événements en temps réel basés sur des données en temps réel reçues par le NSP ; et
un temporiseur d'événements (220), couplé au mécanisme d'événements, pour déclencher des événements en temps réel ;
dans lequel le NSP est intégré sur le même circuit intégré qu'une unité centrale (en anglais « Central Processing Unit » - CPU) (105) qui fonctionne selon un système d'exploitation universel qui communique avec le système d'exploitation en temps réel comme si le système d'exploitation en temps réel était une interface de pilote demandant à accéder aux ressources de la CPU.

10. Processeur selon la revendication 9, comprenant en outre un corrélateur radio (250) couplé au DSP.

11. Processeur selon la revendication 10, dans lequel le corrélateur radio est une radio sans fil Bluetooth (RTM).
